# EUROPÄISCHE PATENTSCHRIFT

(11) **EP 3 066 916 B1**
(45) Veröffentlichungstag und Bekanntmachung des Hinweises auf die Patenterteilung: **08.05.2019**
(21) Anmeldenummer: 15158812.6
(22) Anmeldetag: 12.03.2015
(51) Int. Cl.: A01K 1/015, A01K 5/02

(54) **Hängewagen für Viehstall**
Suspended car for cattle stable
Chariot suspendu pour une étable

(43) Veröffentlichungstag der Anmeldung: 14.09.2016
(73) Patentinhaber: Hartmann Grundbesitz GmbH & Co. KG, 92265 Edelsfeld (DE)
(72) Erfinder: Hartmann, Hans, 92265 Edelsfeld (DE)
(74) Vertreter: Neymeyr, Ulrich Theodor Paul

(56) Entgegenhaltungen:
- EP-A2- 2 042 034
- NL-C- 2 003 561

## Beschreibung

Die Erfindung bezieht sich auf einen Hängewagen gemäß dem Oberbegriff des Anspruchs 1, ein Hängewagenbahnsystem, einen Viehstall und ein Verfahren zum Betrieb eines Viehstalls mit einem Hängewagenbahnsystem.

Hängewagenbahnsysteme für den Einsatz in einem Viehstall sind allgemein bekannt und werden insbesondere dazu verwendet, Einstreu zu den einzelnen Viehboxen oder Liegeflächen zu transportieren und dort automatisiert freizugeben. Dabei kann, wie aus EP 2 042 034 A2 bekannt, jeder Reihe der Viehboxen ein Schienensystem zugeordnet werden. Die Einstreu wird üblicherweise so ausgebracht, dass der Transportwagen mit dem Vorratsbehälter kontinuierlich entlang dem Schienensystem bewegt wird und dabei kontinuierlich die Einstreu ausgebracht wird. Dieses sogenannte kontinuierliche Ausbringen wird bisher als vorteilhaft angesehen, da dadurch die Steuerung der Anlage und die Bestimmung der ausgebrachten Menge einfacher realisiert werden kann und dabei gleichzeitig Materialanhäufungen vermieden werden.

Aus NL 2003561C ist bekannt, dass wenn ein Tier sich an seinem Futterplatz befindet, ein Hängewagen Tierfutter an dieses Tier ausgibt.

Es ist allgemein bekannt, dass Milchvieh dann eine gute Milchleistung bringt, wenn es sich ungestört von äußeren Störungen im Stall aufhalten kann und sich insbesondere dort frei bewegen kann. In diesem Sinne ist es die Aufgabe der vorliegenden Erfindung, einen Viehstall und/oder die dazu gehörigen Vorrichtungen bereitzustellen, die es erlauben, dass das Vieh sich möglichst ungestört im Stall aufhalten kann. Insbesondere soll dabei ein automatisches Versorgungssystem bereitgestellt werden, welches das Vieh insbesondere mit Einstreu versorgt.

Diese Aufgabe wird mit den Merkmalen der unabhängigen Ansprüche gelöst. Vorteilhafte Weiterbildungen ergeben sich aus den Unteransprüchen.

Ein Hängewagen gemäß der Erfindung ist definiert im Anspruch 1 und ein Verfahren zum Betrieb eines Freilaufviehstalls ist definiert im Anspruch 11.

Insbesondere wird dann kein Versorgungsmaterial ausgegeben, wenn ein Tier sich an dem Ausgabeplatz befindet.

Ein wesentlicher Vorteil dieses Hängewagens liegt darin, dass keine Kuh mehr von oben mit Einstreu bestreut oder beworfen wird. Die jeweilige Liegefläche wird nur dann mit Einstreu versorgt, wenn keine Kuh sich an der entsprechenden Liegefläche aufhält. Gerade da es im Stall für die Kuh relativ ruhig und reizarm ist, wirkt das Bewerfen mit Einstreu auf den Rücken als ein überraschendes Ereignis, durch welches die Kuh sich durch die Einstreu auf dem Rücken schmutzig fühlt, aufsteht, zu den Kuhbürsten geht, die im Freilaufbereich angeordnet sind (nicht dargestellt) und sich durch automatisch angetriebene Bürsten reinigen lässt. Da die Kuh diese Zeit nicht als Ruhephase nutzen kann, wirkt sich dieses Ereignis auf die Milchleistung negativ aus.

Ferner enthält die Einstreu häufig eine gewisse Feuchtigkeit, so dass die Einstreu auf der Kuh zumindest teilweise haften bzw. kleben bleibt. Bei der Kuh entwickelt sich das Gefühl, dass sie beschmutzt ist und hierdurch wird das allgemeine Wohlbefinden beeinträchtigt. Auch dieses Gefühl führt dazu, dass die Milchleistung sich reduziert.

Ein weiterer positiver Effekt der Erfindung ist darin zu sehen, dass erfindungsgemäß gezielt die Mitte der Liegefläche mit Einstreu versorgt werden kann. Als Mitte wird der Bereich angesehen, auf dem die Kuh liegt und insbesondere mit dem Torso aufliegt. Wenn, wie bisher bekannt, die Kuh von oben mit der Einstreu bestreut wird, so gleitet ein Großteil über den Rücken unmittelbar seitlich ab und bleibt an den Rändern der Liegefläche liegen. Diese Einstreu kann als weitgehend verschwendet angesehen werden. Aufgrund der normalen Bewegung der Kuh innerhalb der Liegefläche kommt es zu regelmäßigen Bewegungen und Verschiebungen der Einstreu. Aufgrund des Eigengewichts der i.d.R. mittig liegenden Kuh tendiert die Einstreu ferner dazu, an die Ränder gedrückt zu werden. Deshalb ist es nachteilig, wenn durch den bisher bekannten Einstreuvorgang die Einstreu vermehrt an den Randbereichen der Liegeflächen akkumuliert wird. Während es beim Stand der Technik allgemein als vorteilhaft angesehen wurde, Materialanhäufungen zu vermeiden, kann mit der beschriebenen Vorrichtung gezielt da Material ausgebracht werden, wo es benötigt wird, nämlich auf der Fläche, auf die sich die Kuh legt.

Bevorzugt umfasst der erfindungsgemäße Hängewagen eine Antriebseinheit zur Bewegung des Hängewagens an unterschiedliche Ausgabeplätze, wobei vorzugsweise der Hängewagen so eingerichtet ist, dass unterschiedliche Ausgabeplätze erkannt werden und zu jedem Ausgabeplatz die Information gespeichert wird, wann dort zum letzten Mal das Versorgungsmaterial ausgegeben wurde, wobei die Steuerung so eingerichtet ist, dass abhängig von dieser Information Versorgungsmaterial ausgeben wird. Hierdurch wird es möglich, dass alle Liegeflächen nur dann mit neuer Einstreu versorgt werden, wenn es notwendig ist. Hierdurch wird gegenüber bekannten Versorgungsvorrichtungen eine Einsparung von Einstreu erreicht.

Insbesondere kann das Sensorsystem einen optischen Sensor oder einen thermischen Sensor umfassen. Ein optischer Sensor kann insbesondere eine Kamera gegebenenfalls mit automatischer Bildauswertung oder ein aktives Messsystem mit Licht-/Laserquelle, wie z.B. ein Triangulationsmesssystem, aufweisen. Auch kann der Hängewagen ein Funksystem umfassen zur Erkennung und/oder zum Auslesen einer an einem Tier anbringbaren Funkmobileinheit, insbesondere eines Transponders.

Bevorzugt umfasst der Hängewagen ein Energiespeichersystem wie eine Batterie oder Akku zum Antrieb der elektrischen Komponenten. Hierdurch ist der Hängewagen autark und kann ohne eine Kabelverbindung oder Schleifkontakte eingesetzt werden. Schleifkontakte können nämlich in der schmutz- und schwebstoffreichen Umgebung eines Stalls schnell verschmutzen.

Weiter kann der Hängewagen bevorzugt zumindest einen Füllstandssensor, insbesondere einen Gewichtssensor, umfassen zur Bestimmung des Füllstands des Behälters des Hängewagens mit Versorgungsmaterial. Da bei jedem einzelnen Versorgen der Liegeflächen mit Einstreu die Menge des ausgegebenen Materials nicht exakt bestimmbar ist, wird über die Messung des Füllstands erkannt, wann der Behälter des Hängewagens entleert ist, und an der Befüllstation wieder befüllt werden muss. Gewichtssensoren, die bevorzugt an der Aufhängung des Hängewagens angeordnet sind, stellen eine unmittelbare Möglichkeit dar, das Gewicht zu messen. Da ein mechanisches Wiegesystem konstruktiv aufwändig und relativ kostenintensiv ist, kommen heute häufig alternative Systeme zum Einsatz, wie eine optische Messung des Füllstands, wie z.B. über Lichtschrankensysteme oder bildgebende Verfahren. So kann die Gewichtsmessung beispielsweise mit Dehnungsmessstäben oder Messdosen durchgeführt werden. Auch kann bevorzugt der Stromfluss des Förderschneckenmotors ausgewertet werden, wie dies im nachfolgenden Ausführungsbeispiel näher ausgeführt ist.

Vorteilhafter Weise kann der Hängewagen exakt einen Förderer zur Förderung des Versorgungsmaterial aufweisen und der Förderer exakt eine mit Förderelementen, wie Schaufeln oder einer archimedischen Schraube versehen ist. Diese Ausführungsform weicht von Hängewagen ab, bei denen zum einen ein Mischelement zum Einsatz kam und zusätzlich einen Förderer, der das Versorgungsmaterial in vorgegebenen Mengen an vorgegebenen Orten ausgegeben hat.

Der Hängewagen kann an seiner Oberseite einen Einfüllbereich aufweisen, der sich in Hängewagenlängsrichtung, also seiner Bewegungsrichtung, im Wesentlichen über die gesamte Länge des Bereichs erstreckt, der für die Aufnahme des Versorgungsmaterials vorgesehen ist. Hierdurch kann eine gleichmäßige Verteilung des Versorgungsmaterials innerhalb des Hängewagens erzielt werden, wodurch die Misch- und Förderaufgabe des im Hängewagen vorgesehenen Förderers unterstützt werden kann.

Insbesondere ist an einem ein Auslass des Hängewagens, über den das Versorgungsmaterial ausgebbar ist, ein Schlauch angeordnet, zum Leiten des Versorgungsmaterials, wobei insbesondere der Schlauch zwischen 1,5 m und bis 2,5 m bevorzugt bis 2.0 m oberhalb des Ausgabeplatzes endet. Bevorzugt wird hierbei von der Fläche ausgegangen, auf den das Versorgungsmaterial, also insbesondere die Einstreu ausgegeben wird. Hierdurch ist eine gezieltere Zuführung der Einstreu möglich.

Ein erfindungsgemäßes Hängewagenbahnsystem umfasst dabei eine Hängebahn und zumindest einen Hängewagen, der entlang der Hängebahn über einen autonomen Antrieb bewegbar ist.

Und ein entsprechender Freilaufviehstall umfasst bevorzugt ein Hängewagenbahnsystem, einen Melkroboter, einen Freilaufbereich und eine Vielzahl von Liegeflächen. Dabei ist es den Kühen erlaubt, sich selbständig von Liegeflächen über den Freilaufbereich zu dem Melkroboter zu bewegen, um dort von dem Melkroboter gemolken zu werden. Die Vorteile des beschriebenen belegungsabhängigen Versorgens mit Einstreu ergeben sich insbesondere dann, wenn die Kühe sich frei bewegen können und somit gewisse Zeitspannen bestehen, in denen keine Kuh an der jeweiligen Liegefläche ist.

Der Viehstall kann vorteilhafter Weise eine erste Versorgungsvorrichtung eines ersten Versorgungsmaterial, wie z.B. von Einstreu umfassen und eine zweite davon unabhängige Versorgungsvorrichtung eines zweiten Versorgungsmaterials, das sich vom ersten Versorgungsmaterial unterscheidet und insbesondere Kalk sein kann, wobei beide Versorgungsvorrichtungen automatisiert betreibbar sind. Automatisiert betreibbar bedeutet insbesondere, dass über eine z.B. elektrische Aktivierung der Versorgungsvorrichtung(en) hinaus keine Handgriffe von einem Bediener erledigt werden müssen.

Bei einem erfindungsgemäßen Verfahren zum Betrieb eines Freilaufviehstalls mit einem Hängewagenbahnsystem ist ein Hängewagen mit einem autonomen Antrieb versehen, um sich selbsttätig im Schienensystem des Hängewagenbahnsystems zu bewegen. Dabei erkennt ein Sensor, ob einzelne Liegeflächen des Viehstalls mit Vieh belegt sind und gibt bei einer nicht-belegten Liegefläche Einstreu aus.

Insbesondere bewegt der Hängewagen sich in einer Zeitspanne von zumindest 2 Stunden am Stück und/oder pro Tag autonom entlang des Bahnsystems und in dieser Zeitspanne überprüft er kontinuierlich Liegeflächen und bevorzugt sämtliche Liegeflächen des Hängewagenbahnsystems bezüglich nicht belegter Liegeflächen. Wurden nicht belegte Liegeflächen, für eine definierte Zeitdauer nicht mit Einstreu versorgt, werden diese nun mit Einstreu versorgt.

Im Folgenden wird die Erfindung mit Bezug auf die Zeichnungen anhand von bevorzugten Ausführungsformen beispielhaft beschrieben. Es zeigen:
- Fig. 1: den Grundriss eines Viehstalls mit einem Hängewagenbahnsystem,
- Fig. 2: eine Seitenansicht von zwei gegenüberliegenden Liegeflächen mit dem Hängewagenbahnsystem,
- Fig. 3: einen Hängewagen gemäß Fig. 2 in Frontansicht,
- Fig. 4: den Hängewagen von Fig. 3 in einer Seitenansicht
- Fig. 5: ein Ablaufdiagramm des Verfahrens zum Versorgen von Liegeflächen mit Versorgungsmaterial und
- Fig. 6: eine seitliche Ansicht eines alternativen Hängewagens.

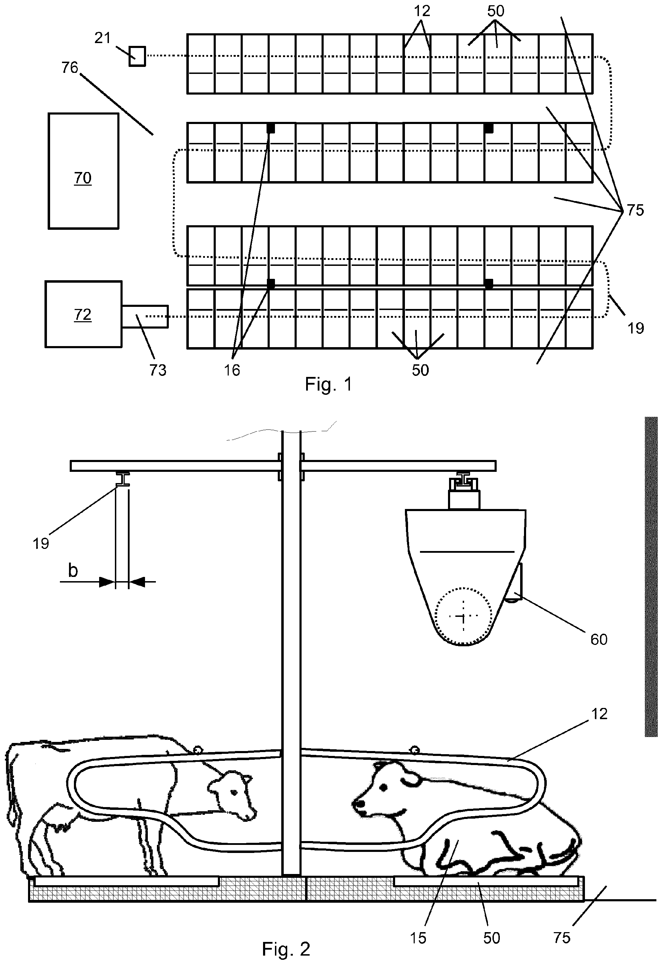

Fig. 1 zeigt einen schematischen Grundriss einer Stallung mit zwei Blöcken von Viehboxen oder Liegeflächen 50, die jeweils zwei Reihen von einander gegenüber liegenden Liegeflächen 50 umfassen. Aus Gründen der Übersichtlichkeit sind die Außenwände des Viehstalls selbst nicht gezeigt. Zwischen den Blöcken sind Gänge vorgesehen, die als Freilaufbereich 75,76 bezeichnet werden und in dem sich das Vieh frei bewegen kann. Dabei können Längsgänge 75 zwischen den Blöcken der Liegeflächen vorgesehen sein, die jeweils über Quergänge 76 miteinander verbunden sind, wie es in der Draufsicht der Fig. 1 gezeigt ist. Die einzelnen Viehboxen bzw. Liegeflächen sind durch Seitensperren 12 voneinander getrennt.

Der Stall umfasst ein Hängewagenbahnsystem mit einer Hängebahn 19, die als eine Schiene entlang den Liegeflächen 50 geführt wird. Das Hängewagenbahnsystem soll Einstreu 22 zu den einzelnen Liegeflächen 50 fördern. Dabei ist der ideale Einstreuplatz mittig in jeder einzelnen Liegefläche. Aus diesem Grund führt die Hängebahn 19 bei der Verwendung eines Hängewagens 10 mit einer mittigen Ausgabe der Einstreus 22 auch mittig über jede Liegefläche in seiner Längsausrichtung. Fig. 1 zeigt vier Reihen der Liegeflächen. Um mit dem Hängewagenbahnsystem sämtliche Liegeflächen zu erreichen, umfasst das Schienensystem mehrere Umlenkungen. An dem einen Ende der Hängebahn 19 ist eine (Akku-)Ladestation 21 vorgesehen. Ein entlang der Hängebahn 19 beweglicher Hängewagen 10 kann die Ladestation 21 ansteuern und dort automatisch mit ihr in Kontakt treten und hierüber mit Strom versorgt werden, um so die Batterien bzw. Akkus des Hängewagens 19 aufzuladen. An dem anderen Ende der Hängebahn 19 ist eine Befüllstation 72 angeordnet. Sie kann auch an einer der Umlenkungen der Hängebahn vorgesehen sein. Diese kann einen oder mehrere Vorratsbehälter umfassen und gegebenenfalls einen Mischbereich, um mehrere Komponenten zu mischen und die Mischung auf ein Förderband 73 zu leiten. Dieses Förderband fördert diese Mischung, die nachfolgend als Einstreu 22 bezeichnet wird, in eine obere Öffnung eines Behälters 20 des Hängewagens. Zudem zeigt Fig. 1 Pfosten 16, über die zum einen das Dach des Stalls gehalten wird und zum anderen die Hängebahn 19 in einer Höhe von 2 bis 4 m oberhalb der Liegeflächen positioniert wird. Die Breite b der Schienen des Schienensystems beträgt bevorzugt zwischen 10 und 20 cm. In bevorzugten Ausführungsformen kann die Breite b weniger als 100 cm betragen.

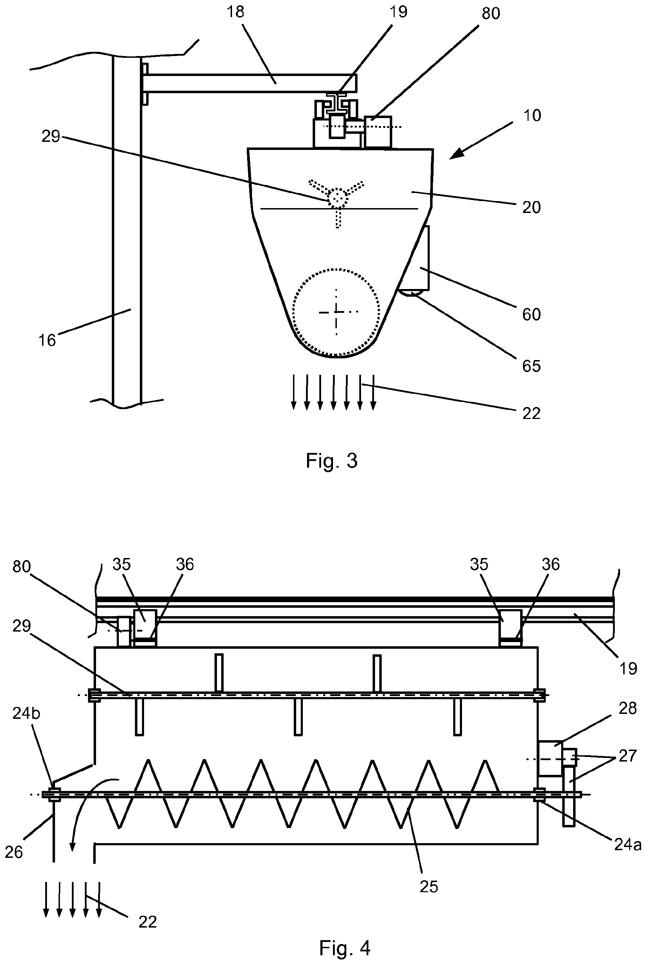

Fig. 2 zeigt eine seitliche Ansicht der Liegeflächen 50 mit dem Pfosten 16 und Fig. 3 zeigt im Detail den in Fig. 2 gezeigten Hängewagen 10. Zum Halten der Hängebahn 19 kommen Querstreben 18 zum Einsatz, die jeweils mit der Hängebahn 19 und den Pfosten 16 verbunden sind. Gemäß Fig. 3 hat die Hängebahn einen H-förmigen Querschnitt, wobei die Rollen des Hängewagens 10 in den Flanken des "H"s geführt und gelagert sind. Der Hängewagen hat bei einer Breite von ca. 1 m eine Länge von ca. 2 - 6 m und an seinen beiden axialen Enden ist eine entsprechende Lagerung bzw. Aufhängung 35 vorgesehen (siehe Fig. 4).

Zumindest eine und bevorzugt beide Aufhängungen 35 umfassen je einen Gewichtssensor 36, über den das Gesamtgewicht des Hängewagens messbar ist. Durch das rechnerische Abziehen des Gewichts des Hängewagens 10 selbst kann das Gewicht der in dem Behälter 20 des Hängewagens 10 aufgenommenen Menge der Einstreu bestimmt werden. Zudem zeigt Fig. 3 eine Antriebseinheit 80, die bspw. mit einer Walze oder einem Zahnantrieb in Eingriff mit der Hängebahn 19 ist und über die der Hängewagen 10 entlang der Hängebahn 19 bewegbar ist. Die Antriebseinheit 80 ist unmittelbar benachbart zu einer der Aufhängungen 35 des Hängewagens 10 angeordnet, so dass auch dann eine Kraftübertragung sichergestellt bleibt, wenn der Hängewagen sich in einer Kurve der Hängebahn 19 befindet.

Die maximale Bewegungsgeschwindigkeit des Hängewagens 10 liegt unter 20 km/h. Geschwindigkeiten von 20 km/h oder mehr sind im Viehstall ungeeignet, da zum einen die mechanischen Belastungen auf das Material des Hängewagenbahnsystems steigen und das Vieh durch sich so schnell bewegende Objekte irritiert und verängstigt werden kann.

An einer Seite umfasst der Hängewagen 10 ein Sensorsystem 60, das mit einem optischen System 65 versehen ist, um zu erkennen, ob sich ein Tier in einer darunter befindlichen Liegefläche 50 befindet. Das Sensorsystem kann ein optisches System mit einer Kamera und entsprechender Auswerteelektronik sein oder ein Reflektionsmesssystem, das mittels Laser oder Ultraschall oder sonstigen vom System ausgesandten und detektierten Wellen ein Objekt in der Liegefläche erkennen kann. Auch kann über eine Infrarotkamera oder einen entsprechenden Sensor die Wärme des Tieres erkannt werden.

Fig. 4 zeigt den Hängewagen 10 in einer seitlichen Ansicht als einen Teilschnitt mit dem Inneren, in dem eine Förderschnecke 25 sich im Wesentlichen über die Länge des Hängewagens 10 erstreckt und die über einen Getriebesatz 27 mittels eines Motors 28 antreibbar ist und dabei über Lager 24a und 24b gelagert ist. An dem dem Motor 28 gegenüber liegenden Ende der Förderschnecke 25 ist ein Auslass für die Einstreu 22 aus dem Behälter 20 des Hängewagens 10 vorgesehen und mit einem Prallblech 26 versehen, so dass die Einstreu in einer im Wesentlichen vertikalen Bewegung aus dem Hängewagen 10 ausgegeben werden kann. Die Förderschnecke ist weitgehend horizontal ausgerichtet. Dabei kann eine gewisse Neigung abwärts in Richtung des Auslasses der Einstreu 22 vorgesehen sein. Der Querschnitt des Behälters ist in dem Sinne U-förmig geformt, dass er im unteren Bereich um die Außenkontur der Förderschnecke 25 geführt wird und zwei Flanken umfasst, die sich keilförmig nach oben in einem Winkel von ca. 30° bis 45° öffnen. Der obere Bereich dient als Speichervolumen der Einstreu und die Einstreu sackt dann aufgrund des Eigengewichts nach unten zur Förderschnecke 25 nach, wenn Einstreu aufgrund der Förderschneckendrehung aus dem Hängewagen 10 herausgefördert wird. Neben der Förderschnecke 25 kann parallel zu ihr und optional eine Rührwelle 29 vorgesehen sein. Diese ist mit einem Antrieb (nicht gezeigt) versehen und weist eine Anzahl von radial vorstehenden Zapfen in der Form von Rührfingern auf. Wenn die Einstreu nicht bereits durch ihr Eigengewicht zur Förderschnecke 25 fällt oder rutscht, so wird diese Bewegung durch die Rührwelle 29 unterstützt, so dass eine Brückenbildung vermieden werden kann.

Die Liegeflächen 50 müssen regelmäßig mit Einstreu versorgt werden. Einstreu ist im Allgemeinen eine Mischung aus Holzspänen und/oder Stroh, die gegebenenfalls mit Kalk versetzt sind. Ein Einstreuen kann einmal pro Tag oder alle 2 bis 3 Tage notwendig sein.

Es ist für die Milchleistung von modernen Hochleistungskühen wichtig, dass sie im Stall möglichst wenig gestört werden und dass sie die Freiheit haben, dann gemolken zu werden, wenn es für sie individuell am angenehmsten ist. Aus diesem Grund kommen Freilaufställe zum Einsatz, bei denen die einzelnen Kühe sich frei bewegen können. Einen Großteil der Zeit liegen Sie auf den Liegeflächen 50, in deren Nähe die Futtertröge (in den Figuren nicht gezeigt) angeordnet sind. Bei Bedarf können sie aufstehen und über den Freilaufbereich 75 zwischen den Liegeflächen 50 zu dem Melkroboter 70 gehen und nach Bedarf von dort zu der gleichen oder zu einer anderen Liegefläche zurückkehren.

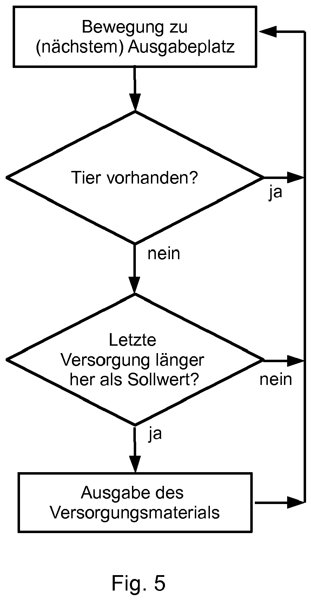

Die Zeitspannen, in denen jeweils ein Liegeplatz 50 nicht belegt ist, wird zum Einstreuen der Einstreu 22 genutzt. Um diese Zeitspannen zu erkennen, fährt der Hängewagen 10 regelmäßig und/oder kontinuierlich entlang der Hängebahn an bevorzugt allen Liegeflächen vorbei. In diesem Verfahren bewegt sich der Hängewagen, wie es in Fig. 5 als Ablaufdiagramm gezeigt ist, zu dem jeweils nächsten Ausgabeplatz bzw. der nächsten Liegefläche 50. Wenn über das Sensorsystem 60 erkannt wird, dass an dem jeweiligen Liegeplatz ein Tier vorhanden ist, so bewegt sich der Hängewagen zu dem nächsten Ausgabeplatz, wo die gleiche Messung vorgenommen wird. Wenn bei einer dieser Messungen erkannt wird, dass kein Tier vorhanden ist, so wird von der Steuerung in einem digitalen Speicher nachgeschaut, wann die letzte Einstreu bei dem jeweiligen Ausgabeplatz vorgenommen wurde. Hierfür ist ein Grenzwert definiert, der bspw. 30 Stunden betragen kann. Andere Werte des Grenzwerts können ein Tag oder zwei Tage sein. Wenn die letzte Versorgung dieses Ausgabeplatzes länger zurückliegt als dieser Grenzwert, so aktiviert die Steuerung die Förderschnecke 25 über den Motor 28, so dass die Einstreu 22 ausgegeben wird. Über die Dauer des Antreibens kann eine Abschätzung der ausgegebenen Menge vorgenommen werden. Im Anschluss stoppt der Motor 28 und in dem elektronischen Speicher wird eingetragen, wann der entsprechende Ausgabeplatz, bzw. Liegefläche 50, mit der Einstreu versorgt wurde.

In einer alternativen Ausführungsform kann bei dem Entlangfahren des Hängewagens 10 an den einzelnen Liegeflächen 50 von der Steuerung zunächst der letzte Einstreuzeitpunkt ausgelesen werden. Wenn dieser kürzer zurückliegt als der Grenzwert, so braucht der Hängewagen 10 gar nicht für eine Messung an dieser Liegefläche anzuhalten, sondern kann unmittelbar zur nächsten Liegefläche fahren.

In einer weiteren alternativen Ausführungsform fährt der Hängewagen, anders als bisher beschrieben, nicht mehr kontinuierlich vom einen Ende bis zum anderen Ende der Hängebahn 19, sondern die Steuerung gibt gezielt Liegeflächen vor, bei denen der Grenzwert der Einstreuversorgung überschritten wurde, so dass ein Einstreuen notwendig ist. Und der Hängewagen fährt diese Positionen solange nacheinander ab, bis alle dieser Liegeflächen einmal frei, also nicht mit einer Kuh belegt, sind und mit der Einstreu versorgt werden können.

Auch kann in einer weiteren Ausführungsform kein Gewichtsensor zur Erkennung des Füllstands des Behälters 20 des Hängewagens verwendet werden, sondern es wird von der Steuerung der Stromfluss des Motors 28 gemessen. Wenn dieser unter einen vorbestimmten Wert abfällt, so kann hierüber erkannt werden, dass die Förderschnecke 25 weitgehend ohne einen Drehwiderstand läuft und dies wird von der Steuerung so interpretiert, dass der Behälter 20 des Hängewagens 10 entleert ist.

Der Hängewagen bewegt sich innerhalb eines Tageszyklus von 24 Stunden bevorzugt tagsüber und nachts befindet er sich an der Ladestation 21, um wieder aufgeladen zu werden. Dabei kann es ausreichend sein, wenn sich der Hängewagen 5 Stunden bewegt. Bei anderen Ausführungsformen bewegt der Hängewagen sich innerhalb von 24 Stunden mindestens 12 Stunden. So kann sehr gut sichergestellt werden, dass der Hängewagen sich zumindest einmal pro Tag über jeden Liegeplatz bewegt, wenn dieser nicht belegt ist. Bei weiteren bevorzugten Ausführungsformen bewegt der Hängewagen sich innerhalb dieser Zeitspanne nur mindestens 2 Stunden und höchstens 12 Stunden, insbesondere höchstens 6 Stunden. Wenn eine Kuh sich zu dem Melkroboter bewegt und dort ca. 10 Minuten oder länger verbleibt und in dem Stall bspw. 50 bis 80 Liegeplätze vorgesehen sind, kann statistisch nicht sichergestellt werden, dass innerhalb einer 24-Stunden Phase der Hängewagen alle Liegeflächen mit Einstreu versorgen kann. Dies gilt auch deshalb, weil eine Liegefläche nach dem Verlassen einer Kuh unmittelbar von einer anderen Kuh belegt werden könnte. Allerdings hat es sich gezeigt, dass Kühe der der freien Auswahl der Liegeplätze wählerisch sind. Wenn ein Liegeplatz stark verschmutzt ist oder weitgehend frei von Einstreu ist, so tendieren die Kühe, sich dort nicht hinzulegen. Da dadurch die nicht-belegte Zeit länger wird, kann das Hängewagensystem auch dann sämtliche Liegeflächen ausreichend mit Einstreu versorgen, wenn der Hängewagen sich nur wenige Stunden pro Tag auf der Suche nach zu versorgenden Liegeplätzen bewegt.

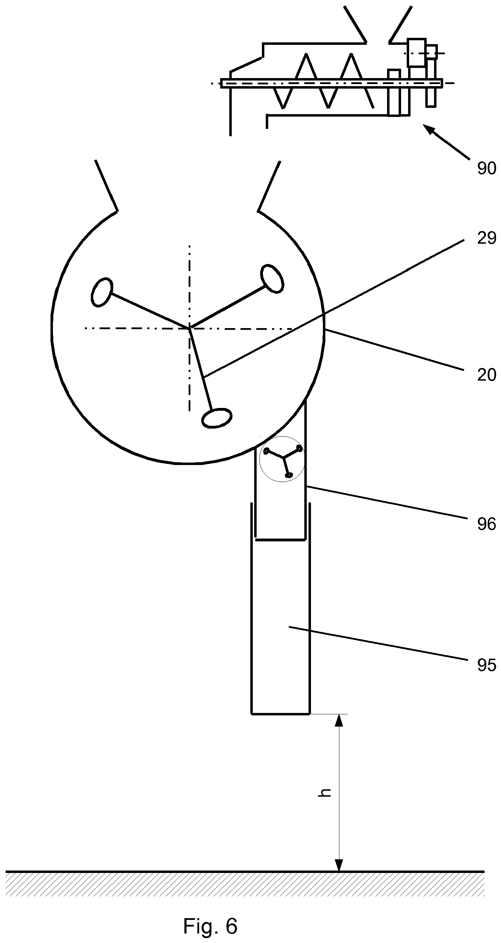

Fig. 6 zeigt einen alternativen Hängewagen 20, mit einer alternativen Rührerwelle 29. Aus Gründen der Übersichtlichkeit ist das Hängebahnsystem nicht gezeigt. Die Rührerwelle hat in ihrer Längsrichtung an unterschiedlichen winkelmäßigen Ausrichtungen eine Mehrzahl von Rührerarmen, die radial wegstehen und mit einer Förderschaufel versehen sein können. Bei dieser Ausführungsform kann der Bereich des Hängewagens, der für das Versorgungsgut vorgesehen ist, im Wesentlichen zylinderförmig sein. An der oben liegenden Seite oberhalb der Versorgungsgutaufnahme ein Öffnung sein, die sich zu zumindest 70% der Länge erstreckt. So kann die Versorgungsgutaufnahme gleichmäßig mit dem Versorgungsgut befüllt werden. Die Rührerwelle kann koaxial zu der Versorgungsgutaufnahme ausgerichtet sein. Der Hängewagen 10 kann bei allen Ausführungsformen einen Ansatz 96 aufweisen, der bspw. rohrförmig ist und nach unten (vertikal oder schräg) ausgerichtet ist und über den das Fördergut (z.B. Einstreu) ausgegeben wird. Innerhalb des Ansatzes kann optional ein Förderer, wie z.B. eine Förderschnecke angeordnet sein. Aus Gründen der Übersichtlichkeit ist in Fig. 6 dieser Förder mit einem Symbol gekennzeichnet, wobei die Förderrichtung selbstverständlich in Längsrichtung des Ansatzes ausgerichtet ist.

Unterhalb des Ansatzes kann ein Schlauch 95 angeordnet sein, der mit dem Ansatz verbunden ist. Das untere Ende des Schlauchs 95, durch den das Fördergut ausgegeben wird, endet mit einem Abstand h von zwischen 1,5 bis 2,0 m oberhalb des Untergrunds. Bei alternativen Ausführungsformen kann der Abstand h bis zu 2,5 m betragen. Der Schlauch 95 hat die erste Funktion, dass die Einstreu punktgenau ausgegeben werden kann. Zudem ist der Schlauch 95 aus einem weichen Material, so dass eine Person, oder Vieh, welches den Schlauch 95 berühren sollte, nicht verletzt oder zumindest nur erschreckt wird. Auch kann es bei dem herkömmlichen "Abwurf" der Einstreu aus einer größeren Höhe bei trockenem Fördergut zu einer Staubwolke kommen, die zunächst für das Vieh unangenehm ist und zudem das genaue Zuleiten der Einstreu und sonstiger Substanzen, wie z.B. Kalk, erschwert. Hierdurch entsteht eine unerwünschte Verlustmenge. Auch ist es dadurch möglich, den Hängewagen 10 selbst höher, also näher an der Stalldecke, anzuordnen. Dadurch wird er von dem Vieh weniger wahrgenommen, was die Ruhe des Viehs erhöht.

Zudem ist eine Versorgungsvorrichtung 90 gezeigt, die ortsfest an dem Stall angeordnet ist. Diese kann zusätzlich zu der hier nicht gezeigten Befüllstation 72 sein. Über eine Mehrzahl von unterschiedlichen Versorgungsvorrichtungen bzw. Befüllstationen kann eine Mehrzahl von unterschiedlichen Versorgungsgütern, wie z.B. Einstreu oder Kalk oder sogar auch Futter an die einzelnen Viehboxen gefördert werden. Bei der Versorgung mit Futter wird bevorzugt der Hängewagen zunächst geleert, um keine Vermischung mit z.B. Einstreu zu erhalten und in diesem Fall wird das Futter nicht in den Liegebereich des Viehs, sondern in einen Versorgungstrog (nicht gezeigt) ausgegeben.

Merkmale unterschiedlicher Ausführungsformen sind frei miteinander kombinierbar, sofern technische Gründe dem nicht zwingend entgegenstehen, und wie definiert in den folgenden Ansprüchen.

### Bezugszeichen:

- 10: Hängewagen
- 12: Seitensperre
- 15: Tier, Kuh
- 16: Pfosten
- 18: Querstrebe
- 19: Hängebahn
- 20: Behälter
- 21: Akkuladestation
- 22: Versorgungsmaterial, Einstreu
- 24a, 24b: Lager der Förderschnecke
- 25: Förderschnecke
- 26: Prallblech
- 27: Getriebesatz
- 28: Motor
- 29: Rührerwelle
- 50: Ausgabeplatz, Liegeplatz
- 60: Sensorsystem
- 65: Kamera
- 70: Melkroboter
- 72: Befüllstation
- 73: Förderband
- 75: Freilaufbereich, Längsgang
- 76: Freilaufbereich, Quergang
- 80: Antriebseinheit
- 90: Versorgungsvorrichtung
- 95: Schlauch
- 96: Ansatz
- b: Breite der Schiene in horizontaler Richtung und quer zur Bewegungsrichtung des Hängewagens
- h: Bodenabstand

## Patentansprüche

1. Hängewagen (10) für einen Freilaufviehstall, in dem sich die Tiere frei bewegen können, für den Transport von Versorgungsmaterial (22), insbesondere von Einstreu, mit einem Behälter (20) zur Aufnahme des Versorgungsmaterials (22) und einem Ausgabesystem (25, 26) zur Ausgabe des Versorgungsmaterials (22) an einem Ausgabeplatz (50), insbesondere einem Liegeplatz des Viehs (15), **dadurch gekennzeichnet, dass** der Hängewagen (10) ein Sensorsystem (60) umfasst zur Erkennung, ob ein Tier (15) sich an dem Ausgabeplatz (50) befindet, und eine Steuerung so eingerichtet ist, dass das Versorgungsmaterial (22) in Abhängigkeit von einem von dem Sensorsystem (60) erzeugten Messsignal ausgebbar ist, wobei die Steuerung eingerichtet ist, dann kein Versorgungsmaterial (22) auszugeben, wenn ein Tier (15) sich an dem Ausgabeplatz (50) befindet.

2. Hängewagen gemäß Anspruch 1,
**dadurch gekennzeichnet, dass**
der Hängewagen (10) eine Antriebseinheit (80) umfasst zur Bewegung des Hängewagens (10) an unterschiedliche Ausgabeplätze (50), wobei der Hängewagen (10) so eingerichtet ist, unterschiedliche Ausgabeplätze (50) zu erkennen und zu jedem Ausgabeplatz (50) die Information zu speichern, wann dort zum letzten Mal das Versorgungsmaterial ausgegeben wurde, und die Steuerung so eingerichtet ist, abhängig von dieser Information Versorgungsmaterial auszugeben.

3. Hängewagen (10) gemäß Anspruch 1 oder 2, **dadurch gekennzeichnet, dass** das Sensorsystem (60) einen optischen Sensor (65) oder einen thermischen Sensor umfasst.

4. Hängewagen gemäß einem der vorangegangenen Ansprüche, **dadurch gekennzeichnet, dass** der Hängewagen (10) ein Energiespeichersystem, wie eine Batterie oder ein Akku, zum Antrieb von elektrischen Verbrauchern des Hängewagens umfasst.

5. Hängewagen gemäß einem der vorangegangenen Ansprüche, **dadurch gekennzeichnet, dass** der Hängewagen (10) zumindest einen Füllstandssensor, insbesondere einen Gewichtssensor, umfasst zur Bestimmung des Füllstands des Behälters (20) des Hängewagens (10) mit Versorgungsmaterial (22).

6. Hängewagen (10) gemäß einem der vorangegangenen Ansprüche, **dadurch gekennzeichnet, dass** er exakt einen Förderer und/oder Mischer zur Förderung und Mischung des Versorgungsmaterial aufweist;
wobei der Förderer und/oder Mischer exakt eine mit Förderelementen, wie Schaufeln, versehene drehbare Welle oder exakt eine archimedischen Schraube umfasst und insbesondere
der Hängewagen an seiner Oberseite einen Einfüllbereich aufweist, der sich in Hängewagenlängsrichtung, also seiner Bewegungsrichtung, im Wesentlichen über die gesamte Länge des Bereichs erstreckt, der für die Aufnahme des Versorgungsmaterials vorgesehen ist.

7. Hängewagen (10) gemäß einem der vorangegangenen Ansprüche, **dadurch gekennzeichnet, dass** an einem Auslass des Hängewagens (10), über den das Versorgungsmaterial ausgebbar ist, ein Schlauch angeordnet ist, zum Leiten des Versorgungsmaterials, wobei insbesondere der Schlauch zwischen 1,5 m und bis 2,5 m, bevorzugt bis 2.0 m, oberhalb des Ausgabeplatzes (50) endet.

8. Hängewagenbahnsystem mit einer Hängebahn (19) und zumindest einem Hängewagen (10) gemäß einem der vorangegangenen Ansprüche, der entlang der Hängebahn (19) über einen Antrieb (80) bewegbar ist.

9. Freilaufviehstall mit einem Hängewagenbahnsystem gemäß Anspruch 8 und mit einem Melkroboter (70), einem Freilaufbereich (75, 76) sowie einer Vielzahl von Liegeflächen (50), der es Kühen erlaubt, sich selbständig von Liegeflächen über den Freilaufbereich zu dem Melkroboter (70) zu bewegen, um dort von dem Melkroboter gemolken zu werden.

10. Freilaufviehstall gemäß Anspruch 9, **dadurch gekennzeichnet, dass** der Viehstall eine erste Versorgungsvorrichtung oder Befüllstation (72) eines ersten Versorgungsmaterials, wie z.B. von Einstreu, und eine zweite davon unabhängige Versorgungsvorrichtung (90) eines zweiten Versorgungsmaterials, das sich vom ersten Versorgungsmaterial unterscheidet und insbesondere Kalk sein kann, umfasst, wobei beide Versorgungsvorrichtungen automatisiert betreibbar sind.

11. Verfahren zum Betrieb eines Freilaufviehstall, in dem sich die Tiere frei bewegen können, mit einem Hängewagenbahnsystem, wobei ein Hängewagen (10) gemäß Anspruch 1 sich über einen Antrieb selbsttätig im Schienensystem des Hängewagenbahnsystem bewegt und ein Sensor erkennt, ob Liegeflächen (50) des Viehstalls mit Vieh (15) belegt sind, und eine Ausgabeeinheit (25) dann Einstreu (22) ausgibt, wenn erkannt wurde, dass eine Liegefläche (50) nicht mit Vieh (15) belegt ist.

12. Verfahren gemäß Anspruch 11, wobei der Hängewagen (10) sich pro 24-Stunden-Zeitraum in einer Zeitspanne von zumindest 2 Stunden am Stück und/oder höchstens 12 Stunden in der Summe im Hängewagenbahnsystem bewegt, wobei in dieser Zeitspanne ein Sensor (60) kontinuierlich Liegeflächen (50) auf das Vorhandensein von Vieh überprüft und bevorzugt sämtliche Liegeflächen (50) des Hängewagenbahnsystems auf nicht belegte Liegeflächen überprüft.

## Claims

1. Suspended car (10) for a free-range cattle shed, in which the animals can move freely, for the transport of supply material (22), in particular, litter, having a container (20) to hold the supply material (22) and a distribution system (25, 26) to distribute the supply material (22) at a distribution site (50), in particular a resting area for the cattle (15),
**characterized in that**
the suspended car (10) comprises a sensor system (60) to detect if an animal (15) is located at the distribution site (50)
and a controller is configured in such a way that the supply material (22) can be distributed depending on a measuring signal generated by the sensor system (60), wherein the controller is configured to not distribute any supply material (22) if an animal (15) is located at the distribution site (50).

2. Suspended car according to Claim 1,
**characterized in that**
the suspended car (10) comprises a drive unit (80) to move the suspended car (10) to different distribution sites (50), wherein
the suspended car (10) is configured to detect different distribution sites (50) and to save information on every distribution site (50) concerning when the supply material was last distributed there,
and the controller is configured to distribute supply material depending on this information.

3. Suspended car (10) according to Claim 1 or 2, **characterized in that** the sensor system (60) comprises an optical sensor (65) or a thermal sensor.

4. Suspended car according to any one of the preceding claims, **characterized in that** the suspended car (10) comprises an energy storage system, such as a battery or an accumulator, to power electrical consumers of the suspended car.

5. Suspended car according to any one of the preceding claims, **characterized in that** the suspended car (10) comprises at least one filling level sensor, especially a weight sensor, to determine the supply-material (22) fill level of the container (20) of the suspended car (10).

6. Suspended car (10) according to any one of the preceding claims, **characterized in that** it comprises exactly one conveyor and/or mixer to convey and mix the supply material, wherein
the conveyor and/or mixer comprises exactly one rotatable shaft provided with conveyor elements, such as shovels, or exactly one Archimedean screw and, in particular,
the suspended car comprises a filling area on its top side, which extends in the longitudinal direction of the suspended car, therefore its movement direction, essentially across the entire length of the area which is provided for holding the supply material.

7. Suspended car (10) according to any one of the preceding claims, **characterized in that** a hose is arranged at an outlet of the suspended car (10), via which the supply material can be distributed, to guide the supply material, wherein, in particular, the hose ends between 1.5 m and up to 2.5 m and preferably up to 2.0 m above the distribution site (50).

8. Suspended-car track system with a suspended track (19) and at least one suspended car (10) in accordance with any one of the preceding claims, which can be moved along the suspended track (19) via a drive (80).

9. Free-range cattle shed having a suspended-car track system in accordance with Claim 8 and having a milking robot (70), an exercise area (75, 76), as well as a plurality of laying areas (50), which allows cows to move on an independent basis from lying areas across the exercise area to the milking robot (70) in order to be milked there by the milking robot.

10. Free-range cattle shed in accordance with Claim 9, **characterized in that** the cattle shed comprises
a first supply device or filling station (72) of a first supply material, such as litter, and an independent second supply device (90) of a second supply material, which differs from the first supply material and, in particular, can be limestone,
wherein both supply devices can be operated in an automated manner.

11. Method to operate a free-range cattle shed, in which the animals can move freely, having a suspended-car track system, wherein a suspended car (10) in accordance with Claim 1 automatically moves within the track system of the suspended-car track system via a drive, and a sensor detects if laying areas (50) of the shed are occupied with cattle (15), and a distribution unit (25) distributes litter (22) if it has been detected that a laying area (50) is not occupied with cattle (15).

12. Method according to Claim 11, wherein the suspended car (10) moves within the suspended-car track system for a time span of at least 2 hours at a time and/or a maximum of 12 hours in total per 24-hour period, wherein, within this time span, a sensor (60) continuously checks laying areas (50) for the presence of cattle and, preferably, checks all laying areas (50) of the suspended-car track system for unoccupied laying areas.

## Revendications

1. Chariot suspendu (10) pour une stabulation libre, dans laquelle les animaux peuvent se déplacer librement, pour le transport de matériau d'approvisionnement (22), notamment de litière, avec un conteneur (20) pour recevoir le matériau d'approvisionnement (22) et un système de distribution (25, 26) pour distribuer le matériau d'approvisionnement (22) à un emplacement de distribution (50), notamment un emplacement de couchage du bétail (15), **caractérisé en ce que**
le chariot suspendu (10) comprend un système de détection (60) pour identifier, si un animal (15) se trouve à l'emplacement de distribution (50), et
une commande est agencée de telle sorte que le matériau d'approvisionnement (22) peut être distribué en fonction d'un signal de mesure généré par le système de détection (60), la commande étant agencée pour ne distribuer ensuite aucun matériau d'approvisionnement (22), si un animal (15) se trouve à l'emplacement de distribution (50).

2. Chariot suspendu selon la revendication 1,
**caractérisé en ce que**
le chariot suspendu (10) comprend une unité d'entraînement (80) pour déplacer le chariot suspendu (10) aux différents emplacements de distribution (50), le chariot suspendu (10) étant agencé pour identifier les différents emplacements de distribution (50) et pour mémoriser à chaque emplacement de distribution (50) l'information stipulant quand le matériau d'approvisionnement y a été distribué pour la dernière fois et la commande étant agencée pour distribuer le matériau d'approvisionnement en fonction de cette information.

3. Chariot suspendu selon la revendication 1 ou 2, **caractérisé en ce que** le système de détection (60) comprend un capteur optique (65) ou un capteur thermique.

4. Chariot suspendu selon l'une quelconque des revendications précédentes, **caractérisé en ce que** le chariot suspendu (10) comprend un système d'accumulation d'énergie comme une batterie ou un accumulateur pour entraîner des consommateurs électriques du chariot suspendu.

5. Chariot suspendu selon l'une quelconque des revendications précédentes, **caractérisé en ce que** le chariot suspendu (10) comprend au moins un capteur de niveau, notamment un capteur de poids, pour déterminer le niveau de remplissage en matériau d'approvisionnement (22) du conteneur (20) du chariot suspendu (10).

6. Chariot suspendu selon l'une quelconque des revendications précédentes, **caractérisé en ce qu'**il comporte exactement un convoyeur et/ou un mélangeur pour transporter et mélanger le matériau d'approvisionnement,
le convoyeur et/ou mélangeur comprenant exactement un arbre pouvant tourner doter d'éléments de transport, comme des pales, ou exactement une vis d'Archimède, et notamment
le chariot suspendu comportant sur sa face supérieure une zone de remplissage, qui s'étend en direction longitudinale du chariot suspendu, donc dans sa direction de déplacement, pour l'essentiel sur toute la longueur de la zone, qui est prévue pour la réception du matériau d'approvisionnement.

7. Chariot suspendu (10) selon l'une quelconque des revendications précédentes, **caractérisé en ce qu'**à une sortie du chariot suspendu (10), par laquelle le matériau d'approvisionnement peut être distribué, un flexible est disposé pour diriger le matériau d'approvisionnement, le flexible aboutissant notamment entre 1,5 m et jusqu'à 2,5 m, de préférence jusqu'à 2,0 m, au-dessus de l'emplacement de distribution (50).

8. Système de voie à chariots suspendus avec une voie suspendue (19) et au moins un chariot suspendu (10) selon l'une quelconque des revendications précédentes, qui peut être déplacé le long de la voie suspendue (19) par le biais d'un système d'entraînement (80).

9. Stabulation libre avec un système de voie à chariot suspendu selon la revendication 8 et avec un robot de traite (70), une zone de libre circulation (75, 76) ainsi qu'une pluralité d'emplacements de couchage (50), permettant aux vaches de se déplacer de façon autonome des emplacements de couchage sur la zone de libre circulation vers le robot de traite (70), pour y être traites par le robot de traite.

10. Stabulation libre selon la revendication 9, **caractérisé en ce que** l'étable comprend un premier dispositif d'approvisionnement ou station de remplissage (72) d'un premier matériau d'approvisionnement, comme par ex. : de la litière, et un deuxième dispositif d'approvisionnement (90) indépendant de celui-ci d'un deuxième matériau d'approvisionnement qui se différencie du premier matériau d'approvisionnement et peut être notamment de la chaux, les deux dispositifs d'approvisionnement pouvant être actionnés de façon automatisée.

11. Procédé pour faire fonctionner une stabulation libre, dans lequel les animaux peuvent se déplacer librement, avec un système de voie de chariot suspendu, un chariot suspendu (10) selon la revendication 1 se déplaçant de façon autonome par un système d'entraînement dans un système à rail du système de voie à chariot suspendu et un capteur identifiant, si des emplacements de couchage (50) de l'étable sont occupés par du bétail (15) et une unité de distribution (25) distribue ensuite de la litière (22), s'il a été identifié qu'une aire de couchage (50) n'est pas occupée par du bétail (15).

12. Procédé selon la revendication 11, le chariot suspendu (10) se déplaçant dans le système à voie de chariot suspendu par période de 24 heures dans un laps de temps d'au moins 2 heures par tête et/ou au maximum de 12 heures au total, dans ce laps de temps un capteur (60) vérifiant en continu les aires de couchage (50) concernant la présence de bétail et vérifiant de préférence toutes les aires de couchage (50) du système de voie de chariot suspendu concernant les aires de couchage non occupées.
